# EUROPEAN PATENT SPECIFICATION

(11) **EP 3 859 814 B1**
(45) Date of publication and mention of the grant of the patent: **10.09.2025**
(21) Application number: 20179396.5
(22) Date of filing: 10.06.2020
(51) Int. Cl.: H01M 50/107, H01M 50/119, H01M 50/178, H01M 50/536, H01M 50/54, H01M 50/55, H01M 50/557, H01M 50/562

(54) **POUCH TYPE BATTERY CELL AND MANUFACTURING METHOD THEREOF**
TASCHENBATTERIEZELLE UND HERSTELLUNGSVERFAHREN DAFÜR
CELLULE DE BATTERIE DE TYPE POCHE ET SON PROCÉDÉ DE FABRICATION

(30) Priority: 03.02.2020 KR 20200012416
(43) Date of publication of application: 04.08.2021
(73) Proprietor: A.F.W. Co., Ltd., Waegwan-eup (KR)
(72) Inventor: KIM, KI YOUNG, Daegu (KR); KIM, MYEONG HUN, Gumi-si (KR)
(74) Representative: Frenkel, Matthias Alexander

(56) References cited:
- WO-A1-2016/195063
- JP-A- 2001 076 706
- JP-A- 2015 079 654
- KR-A- 20180 023 817

## Description

### CROSS-REFERENCE TO RELATED APPLICATION(S)

This application is based on and claims priority under 35 U.S.C. 119 to Korean Patent Application No. 10-2020-0012416, filed on February 3, 2020, in the Korean Intellectual Property Office.

### TECHNICAL FIELD

The present disclosure relates to a pouch-type battery cell and method for manufacturing the same, and more specifically, to a pouch-type battery cell implemented to have high output power and capacity along with enhanced productability and durability by forming electrode leads with friction-welded clad metal to allow the electrode tab to be laser-welded and method for manufacturing the same.

### DESCRIPTION OF RELATED ART

Secondary batteries, which are key components of IT devices, as well as semiconductors and displays, are recently gaining popularity.

Secondary batteries are chargeable and dischargeable unlike primary cells and are thus in wide use for various applications, such as for digital cameras, P-DVDs, MP3 players, mobile phones, PDAs, portable game players, power tools, e-bikes, or other compact electronics, electronic vehicles, hybrid cars, or other high power-required, large-scale products, or power generation or new & renewable energy sectors.

Typical secondary batteries encompass lithium ion batteries, lithium polymer batteries, nickel cadmium batteries, nickel hydrogen batteries, nickel zinc batteries, etc. The unit secondary battery, i.e., battery cell, with a predetermined voltage may be shaped as a block, cylinder, or pouch. Pouch-type battery cells are slim and light as compared with block or cylinder types and may be made in various shapes. Further, pouch-type battery cells exhibit superior heat dissipation and per-area/volume efficiency and are stackable at multiple layers. Thus, pouch-type battery cell are gaining widespread use.

A typical pouch-type battery cell includes electrode assemblies, pouch cases, and electrode leads.

Each electrode assembly includes a positive electrode plate with a positive electrode tab projecting from one side thereof, a negative electrode plate with a negative electrode tab projected from another side thereof, and a separation film positioned between the positive electrode plate and the negative electrode. A plurality of electrode assemblies may be stacked one on another depending on the output voltage or charging/discharging capacity required for the battery cell.

The positive electrode tab and the negative electrode tab are protruded from the positive electrode plate and the negative electrode plate, respectively, by performing punching or notching on the positive electrode plate and the negative electrode plate.

The pouch case receives the electrode assembly and is formed of an aluminum laminated film that meets the electrolyte resistance and superior formability so as to prevent leakage of the electrolyte thereinside.

The electrode leads include a positive electrode lead and a negative electrode lead. An end of the positive electrode lead connects to the positive electrode tab inside the pouch case, and a side thereof protrudes to the outside of the pouch case. An end of the negative electrode lead connects to the negative electrode tab inside the pouch case, and a side thereof projects to the outside of the pouch case.

The positive electrode lead and the negative electrode lead are connected to the positive electrode tab and negative electrode tab, respectively, of the electrode assembly to output electricity from the electrode assembly to the outside.

Conventionally, soldering is typically used for electrical connection between the electrode lead and the electrode tab, and nickel or nickel-plated copper is used for the negative electrode lead for easier soldering. However, use of nickel increases manufacturing costs.

Further, aluminum which is adopted for the positive electrode lead may not fit for secure soldering and be vulnerable to corrosion.

Welding has recently been adopted for connection between electrode tab and electrode lead. Due to the high thermal conductivity and reflectivity of aluminum, ultrasonic welding which has low energy density is typically adopted. However, welding failure frequently occur at the multi-layered electrode tabs, and the joined part is vulnerable to external vibrations or impacts.

Further, due to the low energy density of ultrasonic welding, if the number of electrode tabs stacked increases, the surface area of the electrode tab needs to be broaden. This results in many manufacturing issues.

JP 2001/076706 A discloses a battery comprising electrodes and lead portions made of aluminum /nickel and copper /aluminum laminate connected by laser welding.
WO 2016/195063 A1 discloses a busbar for a vehicle battery made from a laminate formed by ultrasonic welding first and second metal sheets. As an alternative to ultrasonic welding, friction stir welding is mentioned.

### SUMMARY

An object of the invention is to provide an efficient method of manufacturing a pouch-type battery cell.

The object is achieved by the method of claim 1.

According to an embodiment, electrode leads are formed of a friction-welded clad metal and may thus be laser-welded with electrode tabs. Thus, better weldability with the electrode tabs may be achieved.

According to various embodiments of the disclosure, the electrode lead is formed of the clad metal formed by friction-welding copper which has high electrical conductivity and aluminum which is lightweight. Thus, the weight of the electrode lead may be significantly reduced.

According to an embodiment, a method of manufacturing a pouch-type battery cell comprises preparing an electrode assembly including a positive electrode plate, a separation film, and a negative electrode plate, preparing an electrode lead of clad metal to be welded to each of a positive electrode tab formed on the positive electrode plate and a negative electrode tab formed on the negative electrode plate, laser-welding an end of a positive electrode lead of clad metal to the positive electrode tab, laser-welding an end of a negative electrode lead of clad metal to the negative electrode tab, attaching a sealing film to each of the positive electrode lead and the negative electrode lead, packing the electrode assembly in a pouch case after the sealing film is attached, injecting an electrolyte into an inside of the electrode assembly-packed pouch case, and sealing the electrolyte-injected pouch case, wherein preparing the electrode lead includes friction-welding a copper bar and an aluminum bar on a friction welder, rolling a joined body of the copper bar and the aluminum bar into a thin plate; and cutting the thin plate into a size of the electrode lead, with a copper portion and an aluminum portion arranged on both sides of the joined body.

The friction-welding may include mounting each of the copper bar and the aluminum bar on a chuck of the friction welder, first rotating the copper bar and the aluminum bar in opposite directions at 1,600rpm to 2,200rpm, and joining the copper bar and the aluminum bar by pressing the copper bar and the aluminum bar to each other with a force of 7tons to 20tons for a predetermined time while rotating the copper bar and the aluminum bar in the opposite directions.

The friction-welding may include second rotating the joined body of the copper bar and the aluminum bar in one direction, and removing weld beads from the joined body by bringing a bead removal blade on an outer surface of a side of the rotating joined body and moving the bead removal blade to an opposite side thereof.

The rolling may include first rolling the joined body inserted into a roller into a thin plate with a predetermined uniform thickness, and second rolling the joined body to allow the copper portion of the thin plate to be thinner than the aluminum portion.

According to an embodiment, a pouch-type battery cell is manufactured by the method.

The weldability between electrode tab and electrode lead may significantly be enhanced. This enables laser welding with high energy density. Thus, the multi-layered electrode tabs and the electrode lead may be securely joined together with superior durability enough to withstand physical impacts.

Further, there is no need for using nickel which is expensive. Further, the electrode lead formed of the clad metal may withstand high output voltage, and thus, the pouch-type battery cell using the electrode lead may exhibit high output power and capacity.

### BRIEF DESCRIPTION OF THE DRAWINGS

A more complete appreciation of the present disclosure and many of the attendant aspects thereof will be readily obtained as the same becomes better understood by reference to the following detailed description when considered in connection with the accompanying drawings, wherein:
Fig. 1 is a perspective view illustrating a pouch-type battery cell according to an embodiment;
Fig. 2 is an exploded perspective view illustrating a pouch-type battery cell according to an embodiment;
Fig. 3 is a cross-sectional view illustrating a main part of a pouch-type battery cell according to an embodiment;
Fig. 4 is a block diagram illustrating a process for manufacturing a pouch-type battery cell according to an embodiment;
Fig. 5 is a block diagram illustrating a process for manufacturing a pouch-type battery cell according to a second embodiment;
Fig. 6 is a block diagram illustrating a process for manufacturing a pouch-type battery cell according to a third embodiment;
Fig. 7 is a block diagram illustrating a process for manufacturing a pouch-type battery cell according to a fourth embodiment; and
Fig. 8 is a block diagram illustrating a process for manufacturing a pouch-type battery cell according to a fifth embodiment.

### DETAILED DESCRIPTION OF EXEMPLARY EMBODIMENTS

Embodiments of the present disclosure are now described with reference to the accompanying drawings in such a detailed manner as to be easily practiced by one of ordinary skill in the art. However, the embodiments set forth herein are provided merely for a better understanding of the structure and functions, and the scope of the disclosure should not be limited thereby or thereto. Thus, various changes or modifications may be made to the embodiments and various equivalents thereof may be included in the scope of the disclosure. It should be noted that a specific embodiment of the disclosure need not include all of the objectives or effects set forth herein and the scope of the disclosure should not be limited thereto or thereby.

The terms as used herein may be defined as follows.

The terms "first" and "second" are used to distinguish one component from another, and the scope of the disclosure should not be limited thereby. For example, a first component may be denoted a second component, and vice versa without departing from the scope of the present disclosure. When a component is "connected to" or "coupled to" another component, the component may be directly connected or coupled to the other component, or other component(s) may intervene therebetween. In contrast, when a component is "directly connected to" or "directly coupled to" another component, no other intervening components may intervene therebetween. Other terms or phrases representing the relationship between two or more components, such as 'between' and 'adjacent to,' may be interpreted the same way.

IAs used herein, the singular forms "a," "an," and "the" are intended to include the plural forms as well, unless the context clearly indicates otherwise. It will be further understood that the terms "comprise" and/or "have," when used in this specification, specify the presence of stated features, integers, steps, operations, elements, and/or components, but do not preclude the presence or addition of one or more other features, integers, steps, operations, elements, components, and/or groups thereof.

Unless otherwise defined in connection with embodiments of the present disclosure, all terms including technical and scientific terms used herein have the same meaning as commonly understood by one of ordinary skill in the art to which the embodiments of the present disclosure belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

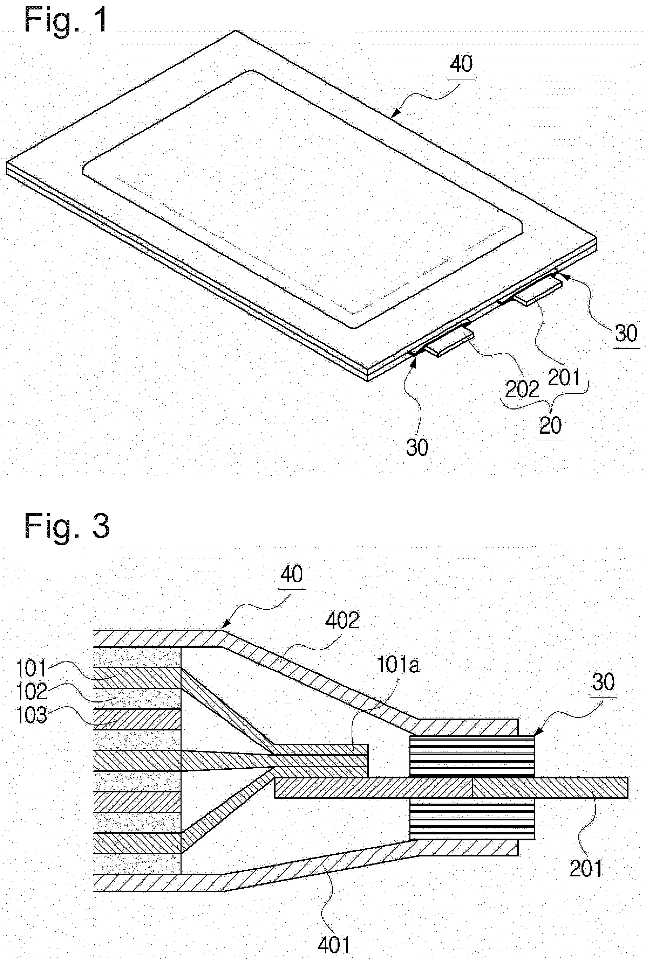

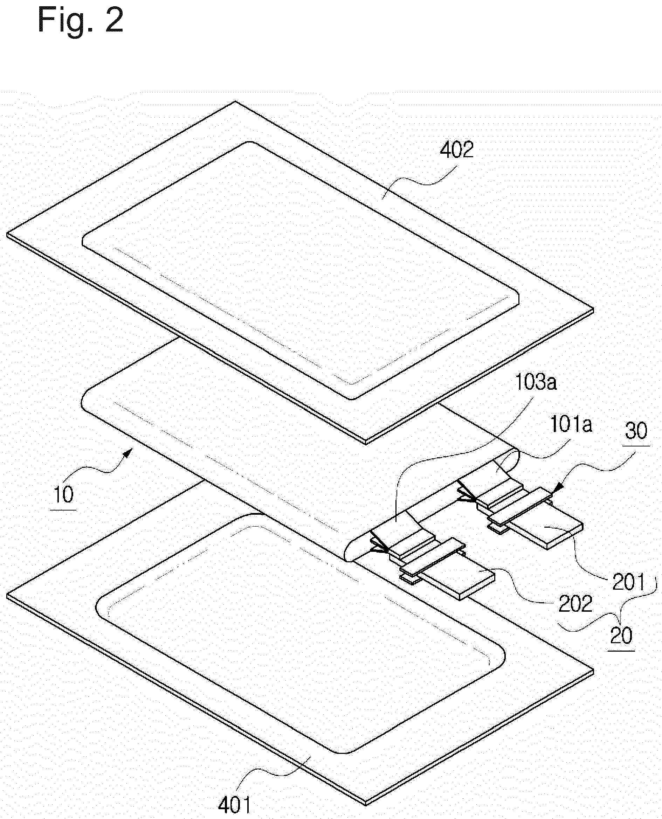

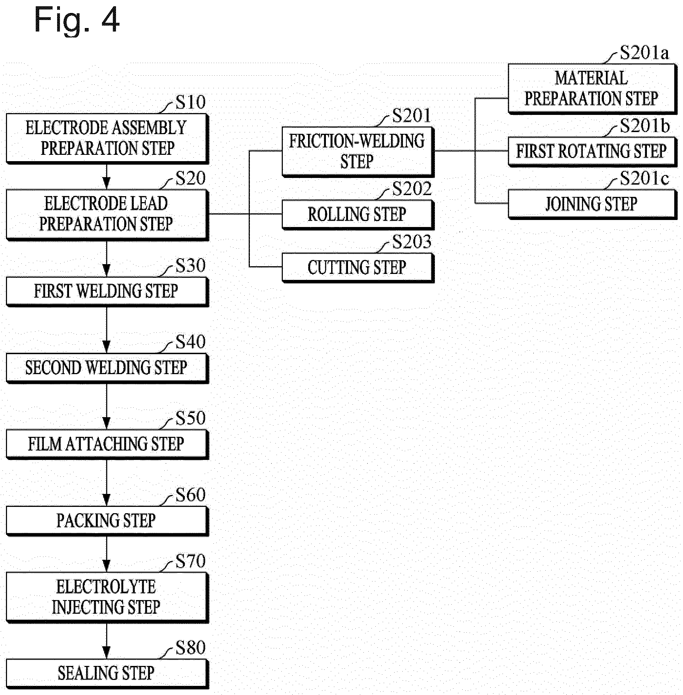

Fig. 1 is a perspective view illustrating a pouch-type battery cell according to an embodiment. Fig. 2 is an exploded perspective view illustrating a pouch-type battery cell according to an embodiment. Fig. 3 is a cross-sectional view illustrating a main part of a pouch-type battery cell according to an embodiment. Fig. 4 is a block diagram illustrating a process for manufacturing a pouch-type battery cell according to an embodiment.

Embodiments of the disclosure are described below with reference to Figs. 1 to 4.

According to an embodiment, a method for manufacturing a pouch-type battery cell includes an electrode assembly preparation step (S10) that forms electrode leads 20 with friction-welded clad metal pieces and enables laser-welding with electrode tabs, an electrode lead preparation step (S20), a first welding step (S30), a second welding step S40), a film attaching step (S50), a packing step (S60), an electrolyte injection step (S70), and a sealing step (S80).

In the electrode assembly preparation step (S10), an electrode assembly 10 is prepared which includes a positive electrode plate 101, a separation film 102, and a negative electrode plate 103.

The positive electrode plate 101 is formed to have a positive electrode tab 101a protrude from a side thereof by punching or notching, and the negative electrode plate 103 is formed to have a negative electrode tab 103a protrude from a side thereof by punching or notching. The separation film 102 is interposed between the positive electrode plate 101 and the negative electrode plate 103. Such electrode assemblies 10 may be stacked one over another depending on the output voltage or charging/discharging capacity required for the battery cell.

The positive electrode plate 101 may be formed of a 10µm-thick aluminum thin film, and the negative electrode plate 103 may be formed of a 5µm-thick copper thin film. However, embodiments of the disclosure are not limited thereto.

The electrode lead preparation step (S20) includes a friction welding step (S201), a rolling step (S202), and a cutting step (S203).

The friction welding step (S201) includes a material preparation step (S201a), a first rotating step (S201b), and a joining step (S201c) to friction-weld a copper bar and an aluminum bar.

In the material preparation step (S201a), a copper (or copper alloy) bar and an aluminum (or aluminum alloy) bar are mounted on the chucks of a friction welder.

In the first rotating step (S201b), the copper bar and aluminum bar mounted on the friction welder are rotated in opposite directions to each other at 1,600rpm to 2,200rpm.

In the joining step (S201c), the copper bar and the aluminum bar are brought in contact with each other while applying a pressure of 7tons to 20tons to the contact surface for a predetermined time, thereby allowing the copper bar and the aluminum bar to be jointed together.

While the copper bar and the aluminum bar are pressed while rotating at high speed, frictional heat ranging from 400°C to 700°C is generated at the contact surface.

The frictional heat may vary depending on the size of the contact surface between the copper bar and the aluminum bar.

When the frictional heat reaches the temperature at which the copper bar and the aluminum bar may be joined together, the rotation of the copper bar and the aluminum bar is stopped, and the pressure of 7tons to 20tons is continuously applied to the contact surface. Thus, by the frictional heat and pressure, the copper bar and the aluminum bar may be joined, forming a clad metal piece which is an integral joined body of the heterogeneous metals.

In the rolling step (S202), the joined body resultant from friction welding the copper bar and the aluminum bar is injected to a rolling mill, into a thin plate shape.

The rolling mill may preferably include multiple rolls installed at predetermined intervals, but embodiments of the disclosure are not limited thereto.

The joined body is rolled by the rolling mill in its lengthwise or widthwise direction, and the resultant thin plate may have a thickness ranging from 0.05mm to 50mm. However, embodiments of the disclosure are not limited thereto.

In the cutting step (S203), the joined body rolled into the thin plate shape is cut to the size of the electrode lead 20, with the copper and aluminum portions positioned on both sides thereof.

In this case, the joined body may be cut so that the copper and aluminum portions are arranged one after the other or left and right as viewed at plan view.

In the first welding step (S30), the positive electrode tab 101a is laser-welded to an end of the positive electrode lead 201 of the clad metal.

To weld an end of the positive electrode lead 201 of the clad metal to the positive electrode tab 101a, the aluminum portion of the positive electrode lead 201 is brought in tight contact with the a side of the positive electrode tab 101a, and the positive electrode tab 101a which is formed of aluminum is laser-welded to the aluminum portion of the positive electrode lead 201.

In this case, the positive electrode tab 101a and the positive electrode lead 201 may preferably be arranged to overlap each other, but without limitation thereto, the laser welding may be performed, with an end of the positive electrode tab 101a contacting an end of the positive electrode lead 201.

Since laser welding has high energy density, a plurality of positive electrode tabs 101a stacked at multiple layers may be closely and securely welded to the positive electrode lead 201, with a degree of durability enough to withstand physical impacts.

In the second welding step (S40), the negative electrode tab 103a is laser-welded to an end of the negative electrode lead 202 of the clad metal.

To weld an end of the negative electrode lead 202 of the clad metal to the negative electrode tab 103a, the copper portion of the negative electrode lead 202 is brought in tight contact with the a side of the negative electrode tab 103a, and the negative electrode tab 103a which is formed of copper is laser-welded to the copper portion of the negative electrode lead 202.

In this case, the negative electrode tab 103a and the negative electrode lead 202 may preferably be arranged to overlap each other, but without limitation thereto, the laser welding may be performed, with an end of the negative electrode tab 101a contacting an end of the negative electrode lead 202.

In the film attaching step (S50), a sealing film 30 is attached to each of the positive electrode lead 201 and the negative electrode lead 202.

In this case, sealing films 30 may be placed over and under each of the positive electrode lead 201 and the negative electrode lead 202 and may then be pressed and fused to each of the positive electrode lead 201 and the negative electrode lead 202 to wrap around each of the positive electrode lead 201 and the negative electrode lead 202. However, embodiments of the disclosure are not limited thereto.

It is preferable to attach the sealing film 30 to fully wrap around the joined portion of the positive electrode lead 201 and negative electrode lead 202 of the clad metal.

Thus, the joined portion of each of the positive electrode lead 201 and negative electrode lead 202 of the clad metal may be prevented from short-circuit or other electrical impacts or corrosion or physical damage due to reaction with the aluminum layer in the pouch case 40.

In the packing step S60, a first pouch film 401 of the pouch case is formed into a predetermined shape to have the electrode assembly 10 seated in the pouch case, and the electrode assembly 10 is placed on the formed first pouch film 401, and a second pouch film 402 is placed thereover. The first pouch film 401 and the second pouch film 402 are fused together along their edges, thereby allowing the electrode assembly 10 to be received inside the pouch case 40.

In this case, the second pouch film 402 may also be formed into a predetermined shape symmetrical to the first pouch film 401.

Upon fusing the first pouch film 401 and the second pouch film 402 together, the respective ends of the positive electrode lead 201 and the negative electrode lead 202 may preferably be protruded from one side of the fused pouch case 40.

As the first pouch film 401 and the second pouch film 402 are fused, with the sealing films 30 attached to the positive electrode lead 201 and the negative electrode lead 202 disposed between the first pouch film 401 and the second pouch film 402, the positive electrode terminal and the negative electrode terminal may be prevented from direct contact with the pouch case 40 which is formed of an aluminum-laminated material and thus short circuit or other electrical impacts or corrosion, or physical damage, while being air-tightly sealed off by the sealing films 30 which are of synthetic resin.

Upon fusing the first pouch film 401 and the second pouch film 402 into the pouch case 40, a side edge portion may be left without fusion, forming an opening for injecting an electrolyte.

In the electrolyte injection step (S70), an electrolyte is injected through the opening of the pouch case 40 which is formed in the step of packing the electrode assembly 10 in the pouch case 40.

In the sealing step (S80), the opening of the pouch case 40, after the electrolyte is injected, is closed by fusion so that the pouch case 40 may be sealed off along its entire edge. Thus, the electrode assembly 10 received inside the pouch case 40 may be fixed in place, and the electrolyte in the pouch case 40 may be prevented from leaking.

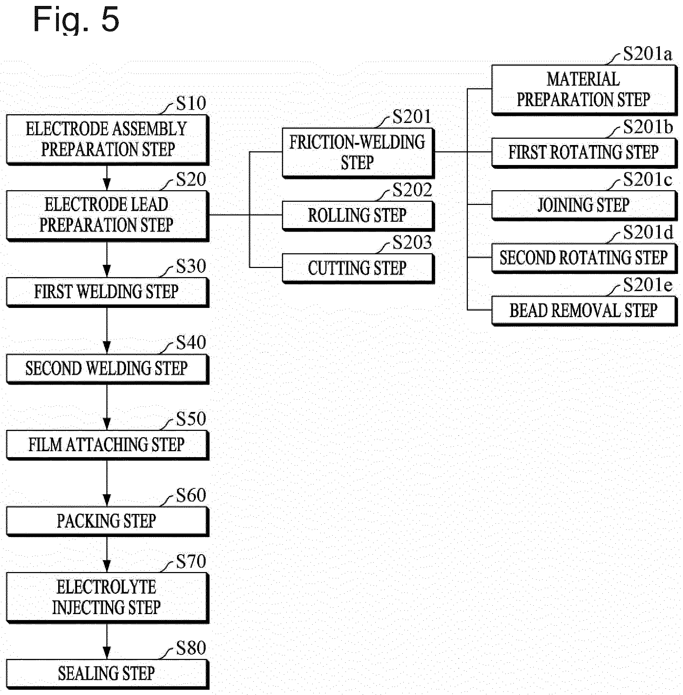

Fig. 5 is a block diagram illustrating a process for manufacturing a pouch-type battery cell according to a second embodiment.

No repetitive description of the same or substantially the same components as those described above is given below.

The friction welding step (S201) may further include a second rotating step (S201d) and a bead removal step (S201e).

In the second rotation step (S201d), the joined body of the copper bar and the aluminum bar is rotated in a direction at 1,600rpm to 2,200rpm.

In the bead removal step (S201e), a bead removing blade is brought in tight contact with the outer circumferential surface of one side of the joined body and is then moved to the opposite side of the joined body and perform turning on the outer surface to remove weld beads that project from the outer surface of the joined body.

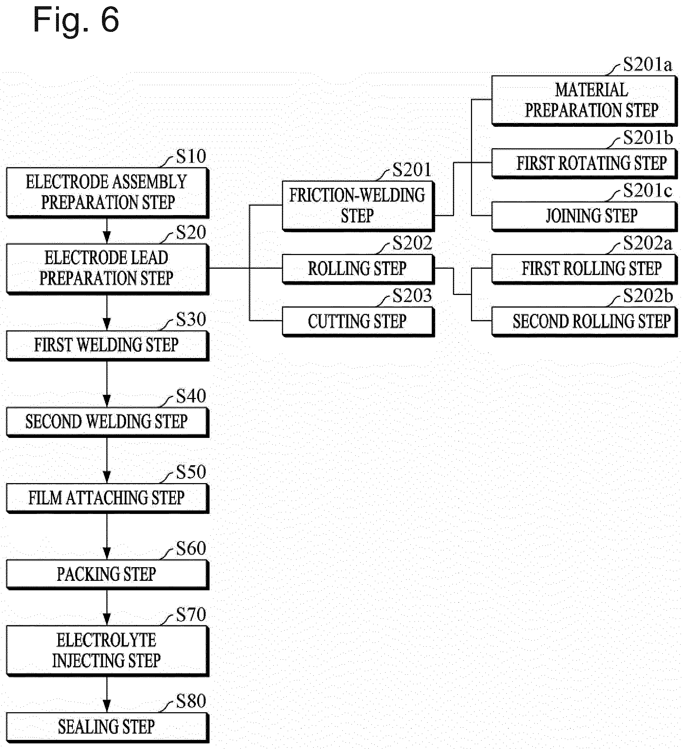

Fig. 6 is a block diagram illustrating a process for manufacturing a pouch-type battery cell according to a third embodiment.

No repetitive description of the same or substantially the same components as those described above is given below.

The rolling step (S202) may include a first rolling step (S202a) and a second rolling step (S202b).

In the first rolling step (S202a), the joined body of the copper bar and aluminum bar friction-welded together is injected into a rolling mill and rolled into a thin plate with a predetermined thickness.

In the second rolling step (S202b), the thin plate is rolled so that the copper portion of the thin plate is thinner than the aluminum portion.

Although the copper portion of the electrode lead 20 of the clad metal is thinner than the aluminum portion, the copper portion and the aluminum portion may be rendered to have the same electrical conductivity because copper is higher in electrical conductivity than aluminum.

Thus, the usage of copper which is heavier than aluminum may be reduced, and thus, the weight of the electrode lead 20 may be reduced.

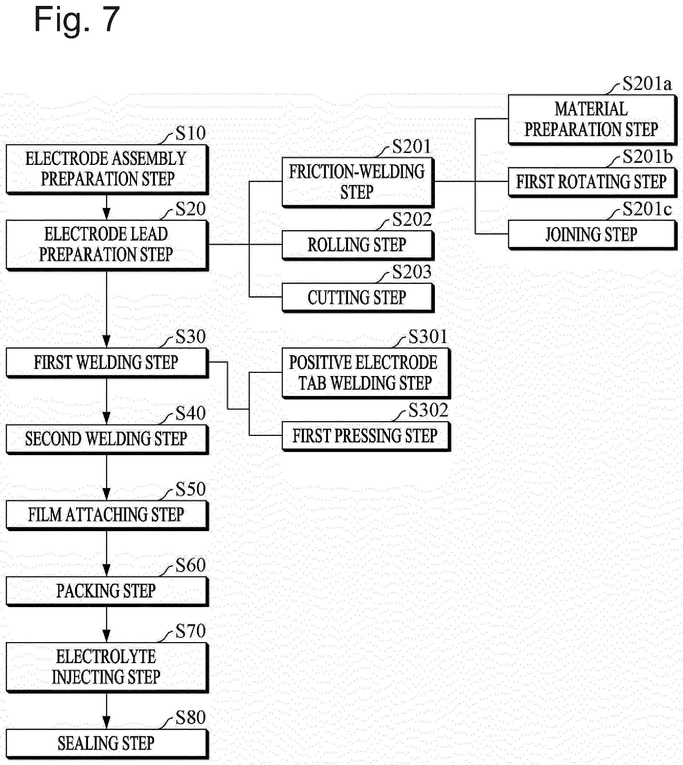

Fig. 7 is a block diagram illustrating a process for manufacturing a pouch-type battery cell according to a fourth embodiment.

No repetitive description of the same or substantially the same components as those described above is given below.

The first welding step (S30) may further include a positive electrode tab welding step (S301).

In the positive electrode tab welding step (S301), the plurality of positive electrode tabs 101a stacked at multiple layers may be ultrasonic-welded along their edges to be prevented from being spaced apart from each other so that when the positive electrode tabs 101a and the positive electrode lead 201 are laser-welded in the first welding step (S30), the plurality of stacked positive electrode tabs 101a are prevented from failure in welding.

The first welding step (S30) may further include a first pressing step (S302).

In the first pressing step (S302), the plurality of stacked positive electrode tabs 101a may be vertically pressed, with them clamped thereover and thereunder, so that the interval between the positive electrode tabs 101a is minimized and thus the positive electrode tabs 101a may be prevented from failure in welding when the positive electrode tabs 101a and the positive electrode lead 201 are laser-welded together in the first welding step (S30).

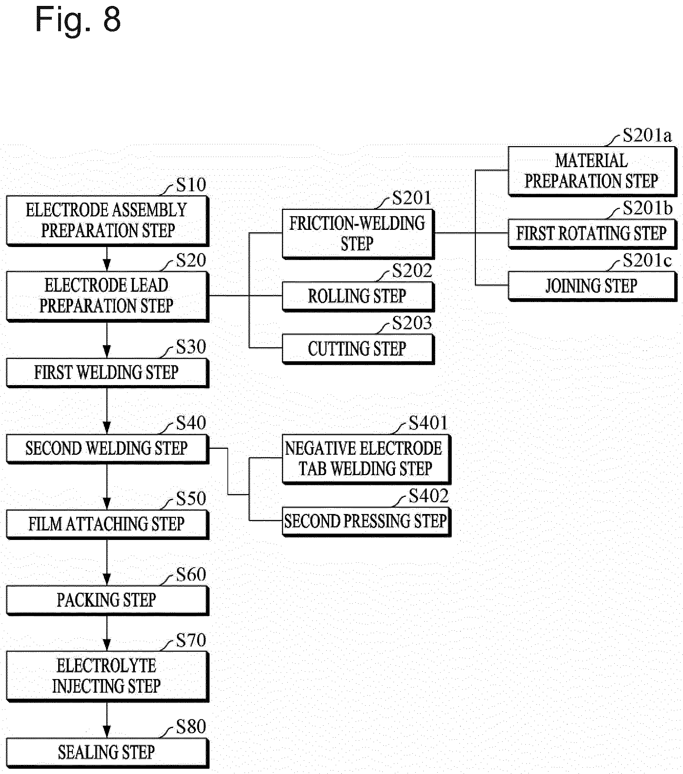

Fig. 8 is a block diagram illustrating a process for manufacturing a pouch-type battery cell according to a fifth embodiment.

No repetitive description of the same or substantially the same components as those described above is given below.

The second welding step (S40) may further include a negative electrode tab welding step (S401).

In the negative electrode tab welding step (S401), the plurality of negative electrode tabs 103a stacked at multiple layers may be ultrasonic-welded along their edges to be prevented from being spaced apart from each other so that when the negative electrode tabs 103a and the negative electrode lead 202 are laser-welded in the second welding step (S40), the plurality of stacked negative electrode tabs 103a are prevented from failure in welding.

The second welding step (S40) may further include a second pressing step (S402).

In the second pressing step (S402), the plurality of stacked negative electrode tabs 103a may be vertically pressed, with them clamped thereover and thereunder, so that the interval between the negative electrode tabs 103a is minimized and thus the negative electrode tabs 103a may be prevented from failure in welding when the negative electrode tabs 103a and the negative electrode lead 202 are laser-welded together in the second welding step (S40).

The embodiments of the disclosure may be implemented by a program or application for implementing the functions of the components of the embodiments, as well as by the above-described apparatus and/or methods, or may also be implemented by a recording medium storing the program. Such implementation may be readily made by one of ordinary skilled in the art from the foregoing description of the embodiments.

While the disclosure has been shown and described with reference to exemplary embodiments thereof, it will be apparent to those of ordinary skill in the art that various changes in form and detail may be made thereto.

## Claims

1. A method of manufacturing a pouch-type battery cell, comprising:
Preparing (S10) an electrode assembly (10) including a positive electrode plate (101), a separation film (102), and a negative electrode plate (103);
preparing (S20) an electrode lead (20) of clad metal to be welded to each of a positive electrode tab (101a) formed on the positive electrode plate (101) and a negative electrode tab (103a) formed on the negative electrode plate (103);
laser-welding (S30) an end of a positive electrode lead (201) of clad metal to the positive electrode tab (101a);
laser-welding (S40) an end of a negative electrode lead (202) of clad metal to the negative electrode tab (103a);
attaching (S50) a sealing film (30) to each of the positive electrode lead (201) and the negative electrode lead (202);
packing (S60) the electrode assembly (10) in a pouch case (40) after the sealing film (30) is attached;
injecting (S70) an electrolyte into an inside of the electrode assembly-packed pouch case (40); and
sealing (S80) the electrolyte-injected pouch case (40),
wherein preparing (S20) the electrode lead (20) includes:
friction-welding (S201) a copper bar and an aluminum bar on a friction welder;
rolling (S202) a joined body of the copper bar and the aluminum bar into a thin plate; and
cutting (S203) the thin plate into a size of the electrode lead (20), with a copper portion and an aluminum portion arranged on both sides of the joined body.

2. The method of claim 1, wherein the friction-welding (S201) includes:
mounting (S201a) each of the copper bar and the aluminum bar on a chuck of the friction welder;
first rotating (S201b) the copper bar and the aluminum bar in opposite directions at 1,600rpm to 2,200rpm; and
joining (S201c) the copper bar and the aluminum bar by pressing the copper bar and the aluminum bar to each other with a force of 7tons to 20tons for a predetermined time while rotating the copper bar and the aluminum bar in the opposite directions.

3. The method of claim 2, wherein the friction-welding includes:
second rotating (S201d) the joined body of the copper bar and the aluminum bar in one direction; and
removing (S201e) weld beads from the joined body by bringing a bead removal blade on an outer surface of a side of the rotating joined body and moving the bead removal blade to an opposite side thereof.

4. The method of claim 1, wherein the rolling (S202) includes:
first rolling (S202a) the joined body inserted into a roller into a thin plate with a predetermined uniform thickness; and
second rolling (S202b) the joined body to allow the copper portion of the thin plate to be thinner than the aluminum portion.

5. A pouch-type battery cell manufactured by the method of claim 1.

## Patentansprüche

1. Verfahren zur Herstellung einer Taschenbatteriezelle, umfassend:
Vorbereiten (S10) einer Elektrodenanordnung (10), die eine positive Elektrodenplatte (101), einen Trennfilm (102) und eine negative Elektrodenplatte (103) umfasst;
Vorbereiten (S20) einer Elektrodenleitung (20) aus plattiertem Metall, die an jede einer positiven Elektrodenlasche (101a), die auf der positiven Elektrodenplatte (101) ausgebildet ist, und einer negativen Elektrodenlasche (103a), die auf der negativen Elektrodenplatte (103) ausgebildet ist, geschweißt werden soll;
Laserschweißen (S30) eines Endes einer positiven Elektrodenleitung (201) aus plattiertem Metall an die positive Elektrodenlasche (101a);
Laserschweißen (S40) eines Endes einer negativen Elektrodenleitung (202) aus plattiertem Metall an die negative Elektrodenlasche (103a);
Anbringen (S50) eines Versiegelungsfilms (30) an jeder der positiven Elektrodenleitung (201) und der negativen Elektrodenleitung (202);
Packen (S60) der Elektrodenanordnung (10) in ein Taschengehäuse (40), nachdem der Versiegelungsfilm (30) angebracht wurde;
Einspritzen (S70) eines Elektrolyten in ein Inneres des mit der Elektrodenanordnung gepackten Taschengehäuses (40); und
Versiegeln (S80) des mit Elektrolyt eingespritzten Taschengehäuses (40),
wobei das Vorbereiten (S20) der Elektrodenleitung (20) umfasst:
Reibschweißen (S201) einer Kupferstange und einer Aluminiumstange auf einem Reibschweißgerät;
Walzen (S202) eines Verbundkörpers aus der Kupferstange und der Aluminiumstange zu einer dünnen Platte und
Schneiden (S203) der dünnen Platte auf eine Größe der Elektrodenleitung (20), wobei ein Kupferabschnitt und ein Aluminiumabschnitt auf beiden Seiten des Verbundkörpers angeordnet sind.

2. Verfahren nach Anspruch 1, wobei das Reibschweißen (S201) umfasst:
Montieren (S201a) jedes der Kupferstange und der Aluminiumstange auf einem Spannfutter des Reibschweißgeräts;
erstes Drehen (S201b) der Kupferstange und der Aluminiumstange in entgegengesetzte Richtungen mit 1600 U/min bis 2200 U/min und
Verbinden (S201c) der Kupferstange und der Aluminiumstange durch Aneinanderpressen der Kupferstange und der Aluminiumstange mit einer Kraft von 7 bis 20 Tonnen für eine vorbestimmte Zeit, während die Kupferstange und die Aluminiumstange in die entgegengesetzten Richtungen gedreht werden.

3. Verfahren nach Anspruch 2, wobei das Reibschweißen umfasst:
zweites Drehen (S201d) des Verbundkörpers aus der Kupferstange und der Aluminiumstange in eine Richtung und
Entfernen (S201e) von Schweißraupen von dem Verbundkörper, indem eine Schweißraupenentfernungsklinge an eine Außenfläche einer Seite des rotierenden Verbundkörpers herangeführt wird und die Schweißraupenentfernungsklinge auf eine gegenüberliegende Seite davon bewegt wird.

4. Verfahren nach Anspruch 1, wobei das Walzen (S202) umfasst:
erstes Walzen (S202a) des in eine Walze eingesetzten Verbundkörpers zu einer dünnen Platte mit einer vorgegebenen gleichmäßigen Dicke und
zweites Walzen (S202b) des Verbundkörpers, um zu ermöglichen, dass der Kupferabschnitt der dünnen Platte dünner ist als der Aluminiumabschnitt.

5. Taschenbatteriezelle, hergestellt nach dem Verfahren aus Anspruch 1.

## Revendications

1. Procédé de fabrication d'une cellule de batterie de type poche, comprenant:
la préparation (S10) d'un ensemble d'électrodes (10) comprenant une plaque d'électrode positive (101), un film de séparation (102) et une plaque d'électrode négative (103);
la préparation (S20) d'un fil d'électrode (20) en métal plaqué à souder à chacune parmi une languette d'électrode positive (101a) formée sur la plaque d'électrode positive (101) et une languette d'électrode négative (103 a) formée sur la plaque d'électrode négative (103);
le soudage au laser (S30) d'une extrémité d'un fil d'électrode positive (201) en métal plaqué à la languette d'électrode positive (101 a);
le soudage au laser (S40) d'une extrémité d'un fil d'électrode négative (202) en métal plaqué à la languette d'électrode négative (103a);
la fixation (S50) d'un film d'étanchéité (30) à chacun parmi le fil d'électrode positive (201) et le fil d'électrode négative (202) ;
l'emballage (S60) de l'ensemble d'électrodes (10) dans un étui de type poche (40) après que le film d'étanchéité (30) a été fixé;
l'injection (S70) d'un électrolyte à l'intérieur de l'étui de type poche (40) de l'ensemble d'électrodes emballé; et
le scellage (S80) de l'étui de type poche rempli d'électrolyte (40),
dans lequel la préparation (S20) du fil d'électrode (20) comprend:
le soudage par frottement (S201) d'une barre de cuivre et d'une barre d'aluminium sur une machine à souder par frottement; le laminage (S202) d'un corps assemblé de la barre de cuivre et de la barre d'aluminium en une plaque mince; et le découpage (S203) de la plaque mince à la taille du fil d'électrode (20), une partie en cuivre et une partie en aluminium étant disposées de part et d'autre du corps assemblé.

2. Procédé selon la revendication 1, dans lequel le soudage par frottement (S201) comprend:
le montage (S201a) de la barre de cuivre et de la barre d'aluminium sur un mandrin de la machine à souder par frottement;
la première rotation (S201b) de la barre de cuivre et de la barre d'aluminium dans des directions opposées à 1 600 tr/min à 2 200 tr/min; et
l'assemblage (S201c) de la barre de cuivre et de la barre d'aluminium en pressant la barre de cuivre et la barre d'aluminium l'une contre l'autre à une force allant de 7 tonnes à 20 tonnes pendant une durée prédéterminée tout en faisant tourner la barre de cuivre et la barre d'aluminium dans les directions opposées.

3. Procédé selon la revendication 2, le soudage par frottement comprenant:
la seconde rotation (S201 d) du corps assemblé de la barre de cuivre et de la barre d'aluminium dans une direction; et
le retrait (S201e) des cordons de soudure du corps assemblé en amenant une lame de retrait de cordon sur une surface extérieure d'un côté du corps assemblé tournant et en déplaçant la lame de retrait de cordon vers un côté opposé de celui-ci.

4. Procédé selon la revendication 1, dans lequel le laminage (S202) comprend:
le premier laminage (S202a) du corps assemblé inséré dans un rouleau en une plaque mince d'une épaisseur uniforme prédéterminée; et
le second laminage (S202b) du corps assemblé pour permettre à la partie en cuivre de la plaque mince d'être plus mince que la partie en aluminium.

5. Cellule de batterie de type poche fabriqué selon le procédé selon la revendication 1.
